# EUROPEAN PATENT APPLICATION

(11) **EP 4 439 355 A1**
(43) Date of publication of application: **02.10.2024**
(21) Application number: 23164961.7
(22) Date of filing: 29.03.2023
(51) Int. Cl.: G06F 21/57, G06F 21/52, G06F 21/44

(54) **APPLICATION PROVISIONING SYSTEM FOR SECURE PROVISIONING OF AN APPLICATION**

(71) Applicant: Siemens Aktiengesellschaft, 80333 München (DE)
(72) Inventor: Kasinathan, Prabhakaran, 81549 München (DE); Knierim, Christian, 81373 München (DE); Wimmer, Martin, 85579 Neubiberg (DE)
(74) Representative: Siemens Patent Attorneys

(57) **Abstract**

The invention provides a method and an application provisioning system (20) for secure provisioning of an application to a device (30), comprising
a certification unit (21) configured to
- receive certification data (22) associated with the application from a certifier (10),
- check whether the certifier (10) complies to access rules for providing the certification data (22),
- transfer the certification data (22) to a distributed database system (23), if the certifier (10) complies to the access rules,

the distributed database system (23) configured to
- store the certification data (22) into a subsequent block (24) of a blockchain,

an approval unit (25) configured to
- receive, from the device (30), an application approval request requesting at least one certification data according to a device policy (26),
- retrieve the at least one certification data from the distributed database system (23),
- check whether the retrieved certification data complies with the device policy (26), and
- send an assertion to the device (30) comprising a statement whether the application complies with the device policy (26) or not, and enabling execution of the application, if the application complies with the device policy.

## Description

The present invention relates to a system and a computer-implemented method for secure provisioning of an application to a device, as well as a computer program product.

SW applications, commonly called apps, are provided by so called ecosystems to devices. Nowadays, Consumer and industrial IoT ecosystems are realized by closed setups. For consumer IoT ecosystems such as Mobile or Smartphone ecosystems, each hardware or software provider has its own controlled and centralized app store.

Consumer app stores for Mobile or Smartphone apps serve as a gateway for the developers, like third party content providers, innovators, and integrators, to use the underlying software stack and their respective hardware features. This means that developers must adapt their software, conform to the rules mandated by the app store owner, and build their apps for each of these app stores individually. Additional efforts from side of the developers are required to adapt and make their applications available in these app stores. Application developers often develop their applications only for the top app stores in the market, to optimize development and support effort.

Industrial IoT ecosystems are relatively new and at an early stage compared to the consumer app store ecosystems. In an industrial ecosystem, applications are performed on more powerful, general-purpose computers which have industrial communication interfaces connected to factory/shop floor devices. Devices in industrial environments have to enforce various isolation requirements and to comply with certification requirements depending on their deployment in more or less sensitive areas. Applications executed on such devices need to comply to security specifications reducing malicious attacks.

This results in manifold requirements which have to be fulfilled by various parties, e.g., by a developer of the applications, SW and Hardware vendors providing SW modules included in the application or HW modules included in the devices required to execute the application, or application providers ensuring high quality and reliability of their product offerings. Industrial applicants, e.g., a factory owner implementing the application in its industrial environment, require fast updates of new upcoming vulnerabilities or application releases. On the other side certification parties may evaluate the applications and provide guarantees with respect to various aspects of the application. Information related to such requirements need to be reliable, trusted and should be accessible easily.

It is therefore an objective of the present invention to provide an application provisioning system which enables easy contribution of different parties to the SW application provision and allows a fast, reliable and trustful implementation, operation and update of an application into an industrial environment without limitation to a single SW and/or HW provider, e.g., devices manufacturer.

The objective is solved by the features of the independent claims. The dependent claims contain further developments of the invention.

A first aspect of the invention concerns an application provisioning system for secure provisioning of an application to a device, comprising the device and a certification unit configured to
- receive certification data associated with the application from a certifier,
- check whether the certifier complies to access rules for providing the certification data,
- transfer the certification data to a distributed database system if the certifier complies to the access rules.

Further, it comprises the distributed database system configured to store the certification data into a subsequent block of a blockchain. It further comprises an approval unit configured to
- receive, from the device, an application approval request requesting at least one certification data according to a device policy,
- retrieve the at least one certification data from the distributed database system,
- check whether the retrieved certification data complies with the device policy, and
- sending an assertion to the device comprising a statement whether the application complies with the device policy or not, enabling execution of the application, if the application complies with the device policy.

The registration at the certification unit restricts the transfer and writing of certification data to a limited set of certifiers which comply to predefined access rules. Thus, writing access to the distributed database can be limited to trusted certifiers providing trusted guarantees, i.e., certification data. The distributed database system, e.g., configured as a distributed ledger provides a trustful decentralized ecosystem to provide the certification data unmodified to the approval unit. The approval unit provides means to check certification data associated with the application depending on the device policy and provides the result to the device. Such the application provisioning system can be operated independent of one single SW / HW provider. It can provide trust guarantees issued by multiple certifiers to devices produced and/or provided by multiple device manufacturers. The certification unit and the approval unit can be implemented as a smart contract executed either on a dedicated HW unit or integrated into a network of the distributed database system.

In a preferable embodiment the application provisioning system comprises an application server, which is publicly accessible and provides the application software to the device.

Such, applications are flexibly retrievable by different types of devices independent of the manufacturer of the device or a provider of a system comprising different devices each enforcing individual device policy.

The application server is configured preferably as a software distribution repository or a container registry accessible via a webserver.

Developers or application providers can package, distribute, and execute their applications, e.g., in virtualized SW containers combined with assigned deployment configurations, , that can run in most computing systems. This allows an easy and flexible distribution of applications provided in a SW container and executed on a container runtime environment on the device.

In a preferred embodiment the distributed database system stores the certification data digitally signed with a signature of the certifier.

To validate different signatures, an administrative interface of the device shall be used by the device owner to select which certifications the application must contain. The device requesting the at least one certification data according to the device policy additionally provides the public keys to prove the signature of the certifiers requested in the device policy.

In a preferred embodiment the certification data according to more than one device policies are requested by the application approval request, wherein the more than one device policies are issued by different policy sources.

This enables to enforce requirements from different players in providing and using the application having different interests. In case of conflicting device policies a final decision is made by the device owner.

In a preferred embodiment the policy source is one of a device manufacturer, a device provider, an owner of the device or the device itself.

This allows the device manufacturer, the provider of the device or the owner of the device to request its own set of approvals requiring specific certification data of a predefined certifier. The public keys required to prove the signature of the certification data has to be available in the device.

In a preferred embodiment the device policy generated by the device itself specifies required certificates depending on a criticality rating of the device.

Required certificates comprises certification data issued by certifiers or generic conditions written in the device policy and provided as assertions from the approval unit. This enables to differentiate which requirements the application has to fulfill depending on the criticality rating of the device.

In a preferred embodiment the criticality rating depends on at least one of a location of the device, a runtime configuration of the device, further applications executed on the device.

This provides a flexibility to the owner of the device being able to adapt the device policy depending on different requirements of the location and task of the device in the actual environment. This holds in the same way to the configuration of the device as the device policy can be adapted with respect to the installed Software, i.e., further application or Hardware components.

In a preferred embodiment the approval unit provides information on at least one modification of the requested certification data stored in the distributed database system to the device, and/or the device generates a notification preferably providing information on the executed application, which is no longer compliant to the changed setting of required certificates.

This allows to keep track of modifications in the classification data, especially those which were requested in the device policy. The notification allows a user of the device to take measures depending on the provided information.

In a preferred embodiment the distributed database system is configured to provide only read access to the approval unit.

In a preferred embodiment the certification unit is configured to forward a subset of the certification data to a private database for storage and/or transfer a location indicator of the stored subset of certification data to the distributed ledger system.

This enables to store further information related to the certification data outside of the distributed database system, especially data which shall not be disclosed to the approval unit and the device but relates to the certification data stored in the distributed database system.

In a preferred embodiment the certification unit is configured to evaluate certification data depending on an evaluation policy and to transfer an evaluation certificate to the distributed database system if the certification data complies to the evaluation policy. The certification data as such can be transferred to the private database.

This allows to evaluate certification data and to provide an updated status of the certification data contained in the evaluation certificate to be stored in a distributed database system.

In a preferred embodiment the distributed database ledger is configured to provide an evaluation notification to the approval unit if a new or updated evaluation certificate is stored.

This allows the approval unit to react on the event of a new or an updated evaluation certificate, e.g., to send an information about the evaluation certificate to the device, especially if the certification data which has been evaluated was requested in the device policy of the device.

A second aspect of the invention concerns a method for a secure provisioning of an application to a device, comprising the steps:
performed by a certification unit,
   - receive certification data associated with the application from a certifier,
   - check whether the certifier complies to access rules for providing the certification data,
   - transfer the certification data to a distributed database system, if the certifier complies to the access rules,
performed by the distributed database system,
   - store the certification data into a subsequent block of a blockchain,
performed by an approval unit,
   - receive, from the device, an application approval request requesting at least one certification data according to a device policy,
   - retrieve the at least one certification data from the distributed database system,
   - check whether the retrieved certification data complies with the device policy, and
   - send an assertion to the device comprising a statement whether the application complies with the device policy or not, enabling execution of the application, if the application complies with the device policy.

The method provides a trustful exchange of data related to the application wherein various registered certifiers can provide information related application like quality, content, developer of application or provider of modules to the application. Whereas in current application provision systems a trusted third party is required, this third party is no longer required, but provided by the proposed method combining decentralized technologies involving permissioned blockchain.

A third aspect concerns a computer program product directly loadable into the internal memory of at least on one digital computer, comprising software code portions for performing the steps of the method when said product is run on said at least one digital computer.

Unless indicated otherwise in the description below, the terms "receive", "check", "retrieve", "send", and the like preferably relate to actions and/or processes and/or processing steps that alter and/or produce data and/or that convert data into other data, the data being able to be presented or available as physical variables, in particular, for example as electrical impulses. In particular, the expression "computer" should be interpreted as broadly as possible in order to cover in particular all electronic devices having data processing properties.

Computers can therefore be for example personal computers, servers, programmable logic controllers (PLCs), handheld computer systems, Pocket PC devices, mobile radios and other communication devices that can process data in computer-aided fashion, processors and other electronic devices for data processing.

Within the context of embodiments of the invention, "transfer into the distributed database system" and the like can be understood to mean for example that, a transaction or the transactions or a data block with its transactions is conveyed to one or more nodes of a distributed database system. If these transactions are for example validated successfully (e.g., by the node/s), these transactions are concatenated as a new data block with at least one existing data block of the distributed database system. For this purpose, the applicable transactions are stored for example in a new data block. In particular, this validation and/or concatenation can be performed by a trusted node.

Within the context of embodiments of the invention, the certification unit and/or the approval unit are exemplarily configured to perform a smart contract, which can be understood to mean for example a program instruction or multiple program instructions, in particular stored in one or more transactions. The program code is in particular executable and is executed in co-operation with the distributed database system, for example. This can be realized by means of an execution environment (e.g., a virtual machine), for example, the execution environment or the program code preferably being Turing complete. The program code is preferably executed by the infrastructure of the distributed database system. This involves for example a virtual machine being realized by the infrastructure of the distributed database system.

Within the context of embodiments of the invention, a "distributed database system", which, by way of example, can also be referred to as a distributed database, can be understood to mean for example a locally distributed database, a blockchain, a distributed ledger, a distributed memory system, a distributed ledger technology (DLT) based system (DLTS), a revision-proof database system, a cloud, a cloud service, a blockchain in a cloud or a peer-to-peer database. Furthermore, features specific to certain blockchain implementations like channels and private data collections (e.g., of Hyperledger Fabric) can be applied to secure sensitive information and also support application-specific use cases. Therefore, the described invention offers more and/or additional processing and routing functionalities using the features of the underlying blockchain technology.

The invention will be explained in more detail by reference to the accompanying figures.
- Fig. 1:: schematically shows a first exemplary embodiment of the inventive application provision system;
- Fig. 2:: illustrates an exemplary embodiment of the inventive method for secure provisioning of an application to a device; and
- Fig. 3:: shows an exemplary environment comprising a second embodiment of the inventive application provision system including interactions between the system and various parties.

Equivalent parts in the different figures are labeled with the same reference signs.

It is noted that in the following detailed description of embodiments, the accompanying drawings are only schematic, and the illustrated elements are not necessarily shown to scale. Rather, the drawings are intended to illustrate functions and the co-operation of components. Here, it is to be understood that any connection or coupling of functional blocks, devices, components or other physical or functional units could also be implemented by an indirect connection or coupling, e.g., via one or more intermediate elements. A connection or a coupling of elements or components or nodes can for example be implemented by a wire-based, a wireless connection and/or a combination of a wire-based and a wireless connection. Functional units can be implemented by dedicated hardware, e.g., processor, firmware or by software, and/or by a combination of dedicated hardware and firmware and software. It is further noted that each functional unit described for an apparatus can perform a functional step of the related method. In the same way, each functional step described for a method can be performed in a functional unit of the related apparatus.

Known consumer application platforms for Mobile phones / Smartphones, like an Apple App Store, Google Play Store are managed by a single SW and/or HW provider of mobile phones, which governs criteria, like quality or SW stacks and libraries which have to be fulfilled by applications to be distributed by that platform. These application platforms are centralized and closed with respect to criteria the applications have to fulfill to be distributed. The criteria are set by a single party.

There are many more parties which have different requirements to be fulfilled by an application which shall be executed on a device particularly if the device interacts or controls other components, e.g., in an industrial environment. Device owners, e.g., factory owners in industrial environment install devices from different hardware vendors and want to use vendor-neutral applications that can run smoothly, connect, and control compatible devices. Applications have to comply with the factory owners' specific or standard-conform quality and security requirements. Application providers, Application developers and/or subcontractors are obliged to provide guarantees supporting the quality of the delivered application or subsystems thereof. Regulators and certifiers, e.g., Evaluation authorities are required to evaluate HW vendors, SW vendors, applications and further and testify compliance by issuing certificates. All these information has to be exchanged and checked in a trustful and secure way.

In the following description "provider" is synonymously used for "vendor" and "Software, in short SW" is synonymously used for "application". Each of the parties can be impersonated as a separate party or several parties, in various combinations, can be impersonated by one single party.

To meet these requirements an open model for a software distribution / application provisioning system is proposed which gives trust guarantees independent from a single entity, like a provider of a traditional ecosystem.

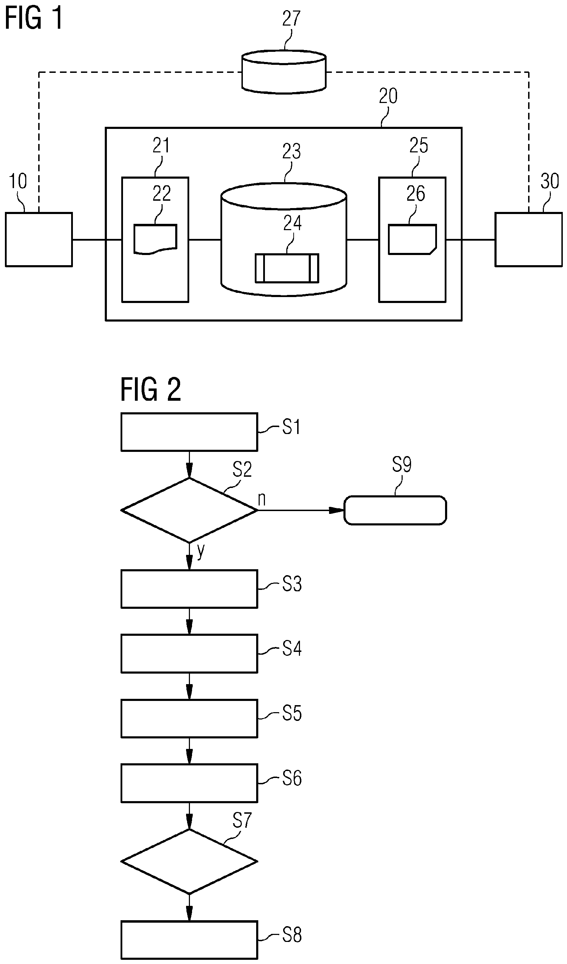

Fig. 1 shows a first exemplary embodiment of an application provisioning system 20 which can provide trust guarantees to a device 30 in a decentralized way for a secure provisioning of an application. The application provisioning system 20 comprises a certification unit 21, a distributed database system 23 and an approval unit 25.

The certification unit 21 is configured to receive certification data 22 associated with the application from a certifier. A certifier 10 can be one provider of an ecosystem, like a device and application provider, an independent certifier like "TUV" or any other entity which is registered as certifier. Certification data 22 is any type of data or attestation relating to a SW developer, e.g., testifying that it works according to certain quality standards, information on SW modules implemented in the application and/or known vulnerabilities thereof, information on HW modules complying to certain security or SW requirements, and furthermore.

The certification unit 21 is configured to check whether the certifier 10 complies to access rules for providing the certification data 22. Access rules are predefined by, e.g., a provider, e.g., a consortium of the application provision system 20. Access rules comprises allowed certifier, i.e., identified by a unique signature, blacklist of certifiers or type of certification data. The certification unit 21 transfers the certification data 22 to the distributed database system 23 if the certifier 10 complies to the access rules.

The certification unit 21 is configured to evaluate certification data 22 depending on an evaluation policy and to transfer and store an evaluation certificate to the distributed database system if the certification data complies to the evaluation policy. The distributed database system 23 provides an evaluation notification to the approval unit 25 if a new or updated evaluation certificate is stored.

The certification unit 21 is configured to forward a subset of the certification data 22 to a private database for storage. A location indicator of the stored subset of certification data is transferred to the distributed ledger system 23 as a reference. In an embodiment, the private database can be configured as a private data collection PDC or similar concepts that exist in the Hyperledger Fabric.

The distributed database system is configured to store the certification data 22 into a subsequent block of a blockchain 24. The distributed database system stores the certification data 22 digitally signed with a signature of the certifier 10. Within the context of embodiments of the invention, a "distributed database system", which can also be referred to as a distributed database, can be understood to mean for example a locally distributed database, a blockchain, a distributed ledger, a distributed memory system, a distributed ledger technology (DLT) based system (DLTS), a revision-proof database system, a cloud, a cloud service, a blockchain in a cloud or a peer-to-peer database. The distributed database system 23 is configured to provide only read access to the approval unit 25.

The approval unit 25 is configured to receive an application approval request from the device requesting at least one certification data 22 according to a device policy 26. The approval unit 25 retrieves the at least one certification data 22 from the distributed database system 23, checks whether the retrieved certification data 22 complies with the device policy 26, and sends an assertion to the device 30 comprising a statement whether the application complies with the device policy or not.

The device 30 is technically linked to a distributed database system 23 which is providing all the approval information, i.e., the certification data in the form of signatures. The distributed database system 23 stores the certification data digitally signed with a signature of the certifier. In an exemplary embodiment, the device requires a first approval from the device manufacturer, a second approval from the current owner of the device, and finally an approval complying to a device policy provided by the current owner. To validate different signatures, i.e., to enforce different policies, the current device owner uses an administrative interface of the device for providing configuration data. The device 30 uses this configuration data and assertions from smart contracts, to validate whether an application is approved to run on it and if successful, then runs the application.

The approval unit 25 performs these actions preferably by executing a Smart Contract. The smart contract is a computer program or a transaction protocol that is intended to automatically execute, control or document events and actions according to the terms of a contract or an agreement. Here, the smart contract is be programmed to validate whether an application is compliant to a device policy 26.

Within the context of embodiments of the invention, "transfer into the distributed database system" and the like can be understood to mean for example that, a transaction or the transactions or a data block with its transactions is conveyed to one or more nodes of a distributed database system. If these transactions are for example validated successfully (e.g., by the node/s), these transactions are concatenated as a new data block with at least one existing data block of the distributed database system. For this purpose, the applicable transactions are stored for example in a new data block. In particular, this validation and/or concatenation can be performed by a trusted node.

Within the context of embodiments of the invention, the certification unit and/or the approval unit are exemplarily configured to perform a smart contract, which can be understood to mean for example a program instruction or multiple program instructions, in particular stored in one or more transactions. The program code is in particular executable and is executed in co-operation with the distributed database system, for example. This can be realized by means of an execution environment (e.g., a virtual machine), for example, the execution environment or the program code preferably being Turing complete. The program code is preferably executed by the infrastructure of the distributed database system. This involves for example a virtual machine being realized by the infrastructure of the distributed database system. Certification data 22 can be at least one assertion or statement from other smart contracts deployed and trusted by the participants of DLT.

The application itself is provided by an application server 27. The application server 27 is configured as a software distribution repository or a container registry accessible via a webserver. In case payment models are used, access can be restricted to the application by adding a payment process which only allows access to the application, after it is paid.

The application provisioning system 20 combines different technologies. The distributed database system 23 is configured as a permissioned blockchain ledger. It allows different parties involved in the provision of the application to gain trust in an application provision process in a decentralized way i.e., no single party is in control over the entire process or database or log entries. However, a consortium of different parties should set up and control changes in the policies, by which an application can be published in the application provisioning system 20.

Applications published in the application provisioning system 20 shall always be evaluated against several smart contracts to improve the cyber security posture and compliance of the ecosystem. For Instance, different smart contracts can be developed by different Cybersecurity or Antivirus Vendors e.g., "Vulnerability Analysis Engine", "App security Policy Evaluation". In result, an application can be recorded as transactions of the smart contract in an immutable way. Such audit log transactions provide an efficient interface for regulatory authorities or customers to evaluate the software vendors' or application developers' security certification status.

Sensitive information, e.g., compliance configuration rules can be protected in a confidential way using the private database, e.g., a private data Collection PDC or similar concepts that exist in the Hyperledger Fabric (HLF). Smart Contracts implemented in the certification unit 25 provide a way to enable decentralized policy enforcement. Each device owner and hardware vendor can enforce their own conditions in the form of a smart contract. If SW developers want their application to be qualified for such device owners or hardware vendors, then they simply call this smart contract and provide their application or its policies for evaluation. The application from this developer is available in the app store if the application qualifies.

Fig. 2 illustrates an exemplary embodiment of the inventive method for secure provisioning of an application to a device.

In a first step S1, certification data associated with the application are receive from a certifier in a certification unit, e.g., the certification unit 20. In step S2 it is checked whether the certifier complies to access rules for providing the certification data. The certification data is transferred to a distributed database system, e.g., distributed database system 23, if the certifier complies to the access rules, see step S3. If the certifier does not comply with the access rules the certification data is not transferred to the distributed database system, see S8. The certification data is stored into a subsequent block of a blockchain of the distributed database system in step S4.

A subset of the certification data can be forwarded to a private database to be stored there. Preferably, a location indicator of the stored subset of certification data is transferred to the distributed ledger system to relate the subsets of the certification data to each other.

This first part of the method provides a restricted and trustful access and provision of certification data to the distributed database system. The distributed database system allows a trustful storage of the certification data, as any modification to the certification data can be identified. In a second part of the method requirements provided by a device are evaluated and checked which have to be fulfilled by the application to allow the device to start the application.

The second part of the method comprises the following steps: In step S5 an application approval request is received in an approval unit, e.g., approval unit, the approval request requesting at least one certification data according to a device policy. In an embodiment the device policy is provided with the application approval request to the approval unit. The at least one certification data is retrieved from the distributed database system, see S6. The retrieved certification data is checked whether it complies with the device policy, see S7 and an assertion is sent to the device comprising a statement whether the application complies with the device policy or not and enabling execution of the application, if the application complies with the device policy, see S8.

The device being connected to the application provisioning system is technically linked in the form of signatures to the distributed database system, particularly to its blockchain which provides all the certification data, i.e., approval information. For instance, the device requests by the device policy following requirements: a first approval of the application from its manufacturer, a second approval of the application from its current owner, and finally further requirement of the policy provided by the current owner of the device. The first approval is provided if a related certification data signed by the device manufacturer can be validated, e.g., by a public key of the manufacturer. Similarly, a certification data signed by the owner of the device is validated, e.g., by the public key of the device owner.

Thus, different signatures are required to provide the approval and policy. Each approval consists of certification data signed by the certifier from which the respective certification data was received. The approval, especially the validation of the signature can either be performed in the approval unit or in the device. In case the validation of the signatures is performed in the approval unit, the device does not have to validate signatures locally but trust the communication between the approval unit and device. The communication is secured, e.g., by sending encrypted data and/or via known trusted interfaces. However, this method discloses owner's policies / validation method to external parties.

In case the validation of the signatures is performed in the device, the device has to provide the means to validate the signatures of those units from which the approval is required. Thus, the device contains the means to validate the signatures, e.g., contains public certificate of those units. The owner of the device imports public certificates that the device must trust, so that the device can validate the policies locally. To validate different signatures an administrative interface of the device shall be used by the device owner to select which certifications the app must contain.

The device itself can request some certifications being requested based on a criticality rating of the device. The criticality rating depends on at least one of a location of the device, a runtime configuration of the device, further applications executed on the device and further. The runtime configuration can depend for example on the activated interfaces, e.g., Profinet communication enabled, automated periodic vulnerability scanning on the device disabled or certain backend services not reachable longer than a maximum time) or other applications running on the device which require other applications to provide certain certification data. Therefore, certification data according to more than one device policies can be requested by the application approval request, wherein the more than one device policies are issued by different policy sources.

The approval unit provides information on at least one modification of the requested certification data stored in the distributed database system to the device, and/or the device generates a notification preferably providing information on the executed application, which is no longer compliant to the changed setting of required certificates. In case the certification data are changing on the device, the device needs to create an alert and provide information about incompliant applications which are no longer compliant on the device. If the compliance state changes during an application installation process, the installer of the application can decide, whether the incompliant applications shall be removed or the application to be installed shall be not installed. In case the certification requirements are not raised by an application installation process but by changes on the device itself or its operational environment, on the device itself can be configured, that the compliance requirements must be fulfilled within a certain grace period.

In an embodiment, applications are executed in a container runtime environment on the device. Application validation and enforcement, i.e., the method steps performed in the approval unit, can be implemented directly on the device, e.g., in an IoT core container which orchestrates the applications on the device locally. In a cloud-based Kubernetes environments, the validation and enforcement would be implemented in a central orchestrator. Requiring certain certifications, i.e., certification data and/or attestations, implies certain security measures being enforced on the device. E.g., a software supplier can be a certifier that provides proof that an application is regularly scanned, was penetration tested and/or bears a minimum software footprint. The security measures to be fulfilled can be published by the certifier in the public blockchain records on the distributed database system or published on the certifier's website.

Subscribing multiple certifications on one device can also provide the capability that multiple security measures need to be applied and that a certain application needs to provide multiple trusted proofs before it can be installed on the device.

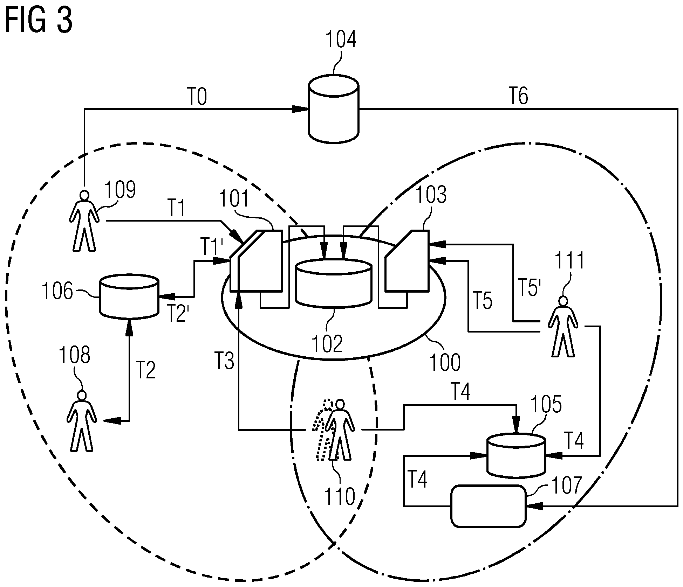

Fig. 3 shows an exemplary environment comprising an application provision system 100 and interactions between the application provision system 100 and various parties.

The application provision system 100 comprises a certification unit 101, a distributed database system 102 and an approval unit 103. As an example, parties which comply to access rules to transfer data to the DDS 102 are the following:
An application developer 109 releases an application to the application server 104, indicated by an arrow with reference sign T0. Certification data related to this application is received in the certification unit 101 from various parties which comply to access rules set by the provider of the application provisioning system 100. Certification data, e.g., a software bill of material SBOM is received from the application developer 109, see T1. The application developer 109 is the certifier for this certification data and the certification data is signed with a signature of the application developer 109. In an embodiment, the signing of the certification data is performed in the certification unit 101. The signed certification data is stored in the distributed database system 102.

Not all the certification data has to be stored in the distributed database system. A subset of the certification data is forwarded to a private database 106, see T1'. An evaluation authority 108 scans and evaluates the application, e.g., in the private database 106, see T2 and transmits the evaluation result to the certification unit 101, here via the private database 106, see T2'. The evaluation result is signed with a key of the evaluation authority 108. In case of the software bill of material SBOM, the software bill of material SBOM remains stored in the private database system 106 and only the evaluation result is transferred to the certification unit 101, signed with the signature of the evaluation authority 108 and stored in the DDS 102.

A device provider 110 can check evaluation data, policies and approve an application to run on its device by submitting approval information as certification data to the certification unit 106, see T3. The device provider 110 cannot access the certification unit 101 but also get in contact with the approval unit 103. The device provider 110 uploads device specific policies and/or customer specific policies to a second private database 105 being connected to the approval unit 103.

A device 107 can query the second private database 105 for device policies, which were provided by the device manufacturer 110 or device owner 111 of the device 107, see T4. The device owner 111 of the device transmits an application approval request comprising at least one device policy to the approval unit 103 for approval, see T5. During execution of the application at the device 107, the device owner 111 can send a query, e.g., for a vulnerability exploitability exchange (VEX) to the approval unit for validation, see T5'. The device downloads the application from the application server 104, see arrow T6. If the device 107 receives an assertion comprising a statement indicating that the application complies with the at least one device policy, the device is enabled to execute the application.

The security advantages of the proposed decentralized application provisioning system 100 can be seen from different parties' perspective:
SW developers 109 with focus on building applications can deliver applications to their customers via one ecosystem which is not controlled by one of the software or hardware vendors. Additional SW programs running on top of the application provisioning system 100 can enable trust by providing the results of independent evaluation of developer software and publishing the results in a transparent way to all participants of the application provisioning system. In addition, software developers 109 can disclose a verifiable proof that their Software Bill of Materials (SBOM) does not contain any known vulnerabilities via Vulnerability Exploitability eXchange (VEX). Thereby, only the necessary information is disclosed regarding i.e., whether a certain vulnerability exist in a product or not, but not the entire SBOM at a given point in time. This could enhance trust in those application developer's applications. Furthermore, application developers 109 can provide independently evaluated information provided by 3rd party tools or certifiers e.g., this app follows secure guiding principles or e.g., this app has test code coverage 99% of its code etc.

Device providers 111 can form a consortium, which defines rules to collaborate in a mutually trusted and decentralized environment. Thus, it enables device providers to compete openly, and work together in a transparent way to gain market share. Thus, allowing developers to make innovation and customers to adopt best products for their use case. By the application provisioning system 100, device providers can enforce best cybersecurity practices on developers before an application can be made available in the application provisioning system 100. For instance, by making use of computer programs to automated policy enforcement or validation of policies for applications.

Device providers 111 can also disclose their Software Bill of Materials (SBOM) to particular to customers in a confidential way without disclosure of the whole Software Bill of Materials in case they would like to show proof that their software does not contain any known vulnerabilities.

The application provisioning system 100 also enables competitors to test new applications on their products, certify that new application is compatible with their devices, and store the respective compatibility result in the application provisioning system 100. Device providers 111 can protect their sensitive information from their competitors in the same ecosystem e.g., their individual policies based on which they allow some 3rd party app to run on their devices.

Device owners 17 make use of the application provisioning system 100 to check each security status of applications, e.g., whether this app has passed certain security standards or guidelines, trust. Such valuable information and automated program results are stored in the permissioned and immutable ledger of the distributed database system. This provides transparency and historical information about the application and its security to device owners 107.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Application provisioning system (20) for secure provisioning of an application to a device (30), comprising
a certification unit (21) configured to
- receive certification data (22) associated with the application from a certifier (10),
- check whether the certifier (10) complies to access rules for providing the certification data (22),
- transfer the certification data (22) to a distributed database system (23), if the certifier (10) complies to the access rules,
the distributed database system (23) configured to
- store the certification data (22) into a subsequent block (24) of a blockchain,
an approval unit (25) configured to
- receive, from the device (30), an application approval request requesting at least one certification data according to a device policy (26),
- retrieve the at least one certification data from the distributed database system (23),
- check whether the retrieved certification data complies with the device policy (26), and
- send an assertion to the device (30) comprising a statement whether the application complies with the device policy (26) or not, and enabling execution of the application, if the application complies with the device policy.

2. Application provisioning system (20) according to claim 1, comprising an application server (27), which is publicly accessible and provides the application software to the device (30) .

3. Application provisioning system according to claim 2, wherein the application server (27) is configured as a software distribution repository or a container registry accessible via a webserver.

4. Application provisioning system according to any of the preceding claims, wherein the distributed database system (20) stores the certification data (22) digitally signed with a signature of the certifier (10).

5. Application provisioning system according to any of the preceding claims, wherein certification data according to more than one device policies are requested by the application approval request, wherein the more than one device policies are issued by different policy sources.

6. Application provisioning system according to any of claims 4-5, the policy source is one of a device manufacturer, a device provider (110), an owner of the device (111) or the device itself.

7. Application provisioning system according to any of claims 5- 6, wherein the device policy (26) generated by the device (30) itself specifies required certificates depending on a criticality rating of the device (30).

8. Application provisioning system according to claim 7, wherein the criticality rating depends on at least one of a location of the device (30), a runtime configuration of the device (30), further applications executed on the device (30) .

9. Application provisioning system according to claim 7, wherein the approval unit (21) provides information on at least one modification of the requested certification data stored in the distributed database system (23) to the device (30), and/or the device generates a notification preferably providing information on the executed application, which is no longer compliant to the changed setting of required certificates.

10. Application provisioning system according to any of the preceding claims, wherein the distributed database system (23) is configured to provide only reading access to the approval unit (25).

11. Application provisioning system according to any of the preceding claims, wherein the certification unit (21) is configured to forward a subset of the certification data to a private database (105, 106) for storage, transfer a location indicator of the stored subset of certification data to the distributed database system (23).

12. Application provisioning system according to any of the preceding claims, wherein the certification unit (21) is configured to evaluate certification data depending on an evaluation policy and to transfer and store an evaluation certificate to the distributed database system if the certification data complies to the evaluation policy.

13. Application provisioning system according to claim 12, wherein the distributed database system (23) is configured to provide an evaluation notification to the approval unit (25) if new or updated evaluation certificate is stored.

14. Method for secure provisioning of an application to a device, comprising the steps:
performed by a certification unit,
- receive (S1) certification data associated with the application from a certifier,
- check (S2) whether the certifier complies to access rules for providing the certification data,
transfer (S3) the certification data to a distributed database system, if the certifier complies to the access rules,
performed by the distributed database system,
- store (S4) the certification data into a subsequent block of a blockchain,
performed by an approval unit,
- receive (S5), from the device, an application approval request requesting at least one certification data according to a device policy,
- retrieve (S6) the at least one certification data from the distributed database system,
- check (S7) whether the retrieved certification data complies with the device policy, and
- send (S8) an assertion to the device comprising a statement whether the application complies with the device policy or not, enabling execution of the application, if the application complies with the device policy.

15. A computer program product directly loadable into the internal memory of at least on one digital computer, comprising software code portions for performing the steps of claim 14 when said product is run on said at least one digital computer.
